# EUROPEAN PATENT APPLICATION

(11) **EP 4 535 468 A1**
(43) Date of publication of application: **09.04.2025**
(21) Application number: 24201071.8
(22) Date of filing: 18.09.2024
(51) Int. Cl.: H01M 8/04014, H01M 8/04029, H01M 8/04007, F28D 1/02, F28D 1/04, F28D 1/053

(54) **FUEL CELL THERMAL MANAGEMENT SYSTEM WITH A BENT KNEE-SHAPED RADIATOR ARRAY AND METHOD OF USING THE SAME**

(30) Priority: 05.10.2023 US 202363588231 P
(71) Applicant: Hydrogenics Corporation, Mississauga, ON L5T 2N6 (CA)
(72) Inventor: PUBRAT, David, Mississauga, L5T 2N6 (CA); WAJDA, Tomasz, Mississauga, L5T 2N6 (CA)
(74) Representative: Marks & Clerk Cummins

(57) **Abstract**

A fuel cell thermal management system includes a radiator array comprising a first radiator, a second radiator, and a fan. The first radiator and the second radiator are configured to transmit liquid of a fuel cell system therethrough for cooling. The first radiator and the second radiator are arranged adjacent one another to form a first angle therebetween.

## Description

### CROSS-REFERENCE TO RELATED APPLICATIONS

This nonprovisional application claims the benefit and priority, under 35 U.S.C. § 119(e) and any other applicable laws or statues, to U.S. Provisional Patent Application Serial No. 63/588,231 filed on October 5, 2023, the entire disclosure of which is hereby expressly incorporated herein by reference.

### TECHNICAL FIELD

The present disclosure relates to thermal management systems and methods of using thermal management systems to cool liquid of a fuel cell system.

### BACKGROUND

Fuel cell systems are known for their efficient use of fuel to produce direct current electric energy to power mobile applications, such as, for example, vehicles, trains, buses, and trucks. Fuel cell systems, as compared to traditional engines, operate at cooler temperatures. For example, fuel cell systems generally operate between about 65°C and about 80°C, while traditional engines, such as diesel powered or gasoline powered engines, generally operate between about 90°C and about 110°C.

Existing fuel cell systems and traditional engines typically have cooling systems including a radiator and a fan. An efficiency of the cooling systems depends on a difference between an ambient temperature and a temperature of the system to be cooled. Generally, the greater the difference in temperature, the more efficient the cooling system operates. Because the operating temperature of fuel cell systems is generally lower than traditional engines, the difference in temperature for fuel cell systems is lower than that of traditional engines.

To increase the efficiency of cooling systems for fuel cell systems, a different layout of radiators than the layout used in traditional engines may be advantageous. The present disclosure is directed to a fuel cell thermal management system and methods of using the fuel cell thermal management system to cool liquid of a fuel cell system. For example, including at least two radiators in the thermal management system may be useful to increase a surface area of the radiators and/or increase air flow to the fans. The layout of the present thermal management system maximizes its cooling efficiency of the liquid in the fuel cell system.

### SUMMARY

Embodiments of the present disclosure are included to meet these and other needs.

In one aspect, described herein, a thermal management system for cooling a liquid of a fuel cell system includes a first radiator, a second radiator, and a fan. The first radiator is configured to transmit at least a first portion of the liquid of the fuel cell system therethrough for cooling of the at least a first portion of the liquid. The first radiator includes a first lateral side and a second lateral side opposite the first lateral side. The second radiator is configured to transmit at least a second portion of the liquid of the fuel cell system therethrough for cooling of the at least a second portion of the liquid. The second radiator includes a first lateral side and a second lateral side opposite the first lateral side. The second lateral side of the first radiator is positioned adjacent the first lateral side of the second radiator to form a first angle therebetween. The fan is arranged underneath the first radiator and the second radiator. The fan is configured to draw ambient air into the first radiator and the second radiator to cool the liquid of the fuel cell system passing through the first radiator and the second radiator.

In some embodiments, the first angle formed between the second lateral side of the first radiator and the first lateral side of the second radiator may range from about 10 degrees to about 170 degrees. In some embodiments, the first angle formed between the second lateral side of the first radiator and the first lateral side of the second radiator may range from about 30 degrees to about 60 degrees.

In some embodiments, the first radiator may include a front face extending between and interconnecting the first lateral side and the second lateral side and a back face opposite the front face and facing toward the fan. In some embodiments, the second radiator may include a front face extending between and interconnecting the first lateral side and the second lateral side and a back face opposite the front face and facing toward the fan. In some embodiments, a distance between the fan and the back face of each of the first radiator and the second radiator at the first angle may be at least about 100 mm. In some embodiments, the distance may be at least about 200 mm.

In some embodiments, the thermal management system may further include a third radiator configured to transmit at least a third portion of the liquid of the fuel cell system therethrough for cooling of the at least a third portion of the liquid. In some embodiments, the third radiator includes a first lateral side and a second lateral side opposite the first lateral side. In some embodiments, the second lateral side of the second radiator is positioned adjacent the first lateral side of the third radiator to form a second angle therebetween.

In some embodiments, the thermal management system may further include a fourth radiator configured to transmit at least a fourth portion of the liquid of the fuel cell system therethrough for cooling of the at least a fourth portion of the liquid. In some embodiments, the fourth radiator may include a first lateral side and a second lateral side opposite the first lateral side. In some embodiments, the second lateral side of the third radiator may be positioned adjacent the first lateral side of the fourth radiator to form a third angle therebetween.

In some embodiments, the first radiator and the second radiator may extend at least 100 degrees circumferentially around the fan. In some embodiments, the thermal management system may further include a frame arranged between each of the first radiator and the second radiator and the fan. In some embodiments, the frame may be coupled to a top surface of a vehicle so that the first radiator and the second radiator are each exposed to ambient air. In some embodiments, the vehicle may be a train or a truck.

According to a second aspect, described herein, a method of cooling a liquid of a fuel cell system includes arranging a first radiator adjacent a second radiator to form a first angle therebetween. The method includes positioning a fan underneath the first radiator and the second radiator. The method includes flowing the liquid from the fuel cell system through the first radiator and the second radiator. The method includes drawing ambient air into the first radiator and the second radiator via the fan. The method includes cooling the liquid with the ambient air to form a cool liquid. The method includes recirculating the cool liquid to the fuel cell system.

In some embodiments, the method may further comprise forming the first angle to range from about 10 degrees to about 170 degrees. In some embodiments, the method may further comprise forming the first angle to range from about 30 degrees to about 60 degrees.

In some embodiments, the method may further comprise creating a distance between the fan and each of the first radiator and the second radiator at the first angle, the distance being at least 100 mm. In some embodiments, the method may further comprise arranging a third radiator adjacent the second radiator to form a second angle therebetween. In some embodiments, the second angle may range from about 10 degrees to about 170 degrees.

In some embodiments, the method may further comprise arranging a fourth radiator adjacent the third radiator to form a third angle therebetween. In some embodiments, the third angle may range from about 10 degrees to about 170 degrees.

In some embodiments, the method may further comprise mounting the first radiator and the second radiator in a frame, positioning the frame above the fan, and mounting the frame on a top surface of a vehicle. In some embodiments, the vehicle may be a train.

### BRIEF DESCRIPTION OF THE DRAWINGS

FIG. 1A is a schematic view of an exemplary fuel cell system including an air delivery system, a hydrogen delivery system, and a fuel cell module including a stack of multiple fuel cells;
FIG. 1B is a cutaway view of an exemplary fuel cell system including an air delivery system, hydrogen delivery systems, and a plurality of fuel cell modules each including multiple fuel cell stacks;
FIG. 1C is a perspective view of an exemplary repeating unit of a fuel cell stack of the fuel cell system of FIG. 1A;
FIG. 1D is a cross-sectional view of an exemplary repeating unit of the fuel cell stack of FIG. 1C;
FIG. 2A is an illustration of a traditional thermal management system including two fans and two radiators that are aligned with one another to form a 180 degree angle therebetween;
FIG. 2B is an illustration of another traditional thermal management system including two fans and one radiator;
FIG. 3 is an illustration of an exemplary thermal management system used with the fuel cell system of FIG. 1A to cool liquid of the fuel cell system, the thermal management system including a first radiator and a second radiator arranged circumferentially around a fan to form a first angle between the first radiator and the second radiator;
FIG. 4 is a perspective view of the exemplary thermal management system of FIG. 3 showing that the first radiator and the second radiator are arranged on top of the fan;
FIG. 5 is a cutaway view of the thermal management system of FIG. 4 showing the first radiator and the second radiator arranged within a frame to form the first angle between the first radiator and the second radiator;
FIG. 6A is a perspective view of the frame of the thermal management system of FIG. 4;
FIG. 6B is a perspective view of the first radiator and the second radiator of the thermal management system of FIG. 4 suggesting that the first radiator and the second radiator fit within the frame of FIG. 6A;
FIG. 7A is a perspective view of the thermal management system of FIG. 4 showing an ambient air flow through the first radiator and the second radiator, through the fan, and out of an exhaust duct;
FIG. 7B is a perspective view of the thermal management system of FIG. 4 showing a liquid flow from the fuel cell system, into an inlet port of the thermal management system, across each of the first and second radiators, and out of an outlet port to be recirculated through the fuel cell system;
FIG. 8 is an illustration of the thermal management system of FIG. 3 including an additional radiator arranged circumferentially around the fan;
FIG. 9 is an illustration of the thermal management system of FIG. 8 including an additional radiator arranged circumferentially around the fan;
FIG. 10 is a front view of the thermal management system of FIG. 4 including an additional fan arranged underneath the first and second radiators;
FIG. 11 is a schematic view of the fuel cell system fluidly connected to the thermal management system of FIG. 4 to cool the liquid of the fuel cell system;
FIG. 12 is an alternative embodiment of a thermal management system having a different liquid flow than the liquid flow shown in FIG. 7B; and
FIG. 13 is an alternative embodiment of a thermal management system having a different liquid flow than the liquid flow shown in FIG. 7B and the liquid flow shown in FIG. 12.

### DETAILED DESCRIPTION

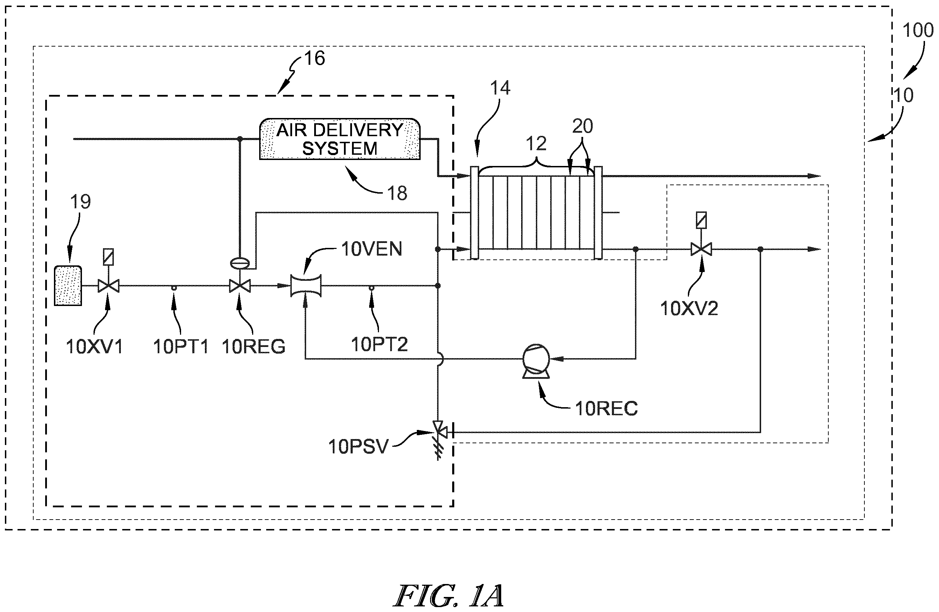

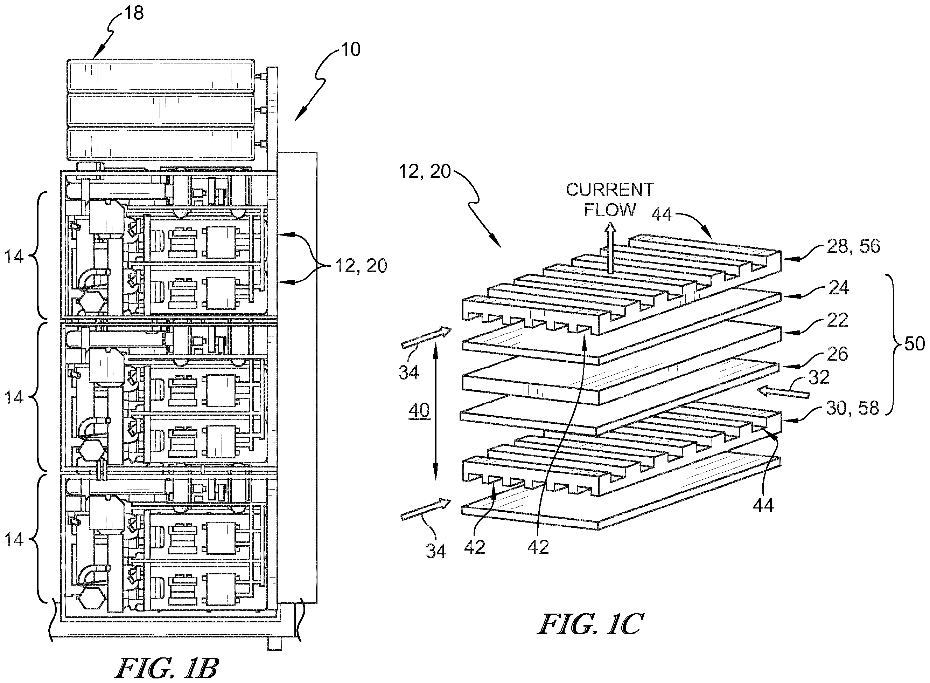

As shown in FIG. 1A, fuel cell systems 10 often include one or more fuel cell stacks 12 or fuel cell modules 14 connected to a balance of plant (BOP) 16, including various components, to support the electrochemical conversion, generation, and/or distribution of electrical power to help meet modern day industrial and commercial needs in an environmentally friendly way. As shown in FIGS. 1B and 1C, fuel cell systems 10 may include fuel cell stacks 12 comprising a plurality of individual fuel cells 20. Each fuel cell stack 12 may house a plurality of fuel cells 20 assembled together in series and/or in parallel. The fuel cell system 10 may include one or more fuel cell modules 14, as shown in FIGS. 1A and 1B. In some embodiments, the fuel cell system 10 may comprise one or more fuel cell stacks 12.

Each fuel cell module 14 may include a plurality of fuel cell stacks 12 and/or a plurality of fuel cells 20. The fuel cell module 14 may also include a suitable combination of associated structural elements, mechanical systems, hardware, firmware, and/or software that is employed to support the function and operation of the fuel cell module 14. Such items include, without limitation, piping, sensors, regulators, current collectors, seals, and insulators.

The fuel cells 20 in the fuel cell stacks 12 may be stacked together to multiply and increase the voltage output of a single fuel cell stack 12. The number of fuel cell stacks 12 in a fuel cell system 10 can vary depending on the amount of power required to operate the fuel cell system 10 and meet the power need of any load. The number of fuel cells 20 in a fuel cell stack 12 can vary depending on the amount of power required to operate the fuel cell system 10 including the fuel cell stacks 12.

The number of fuel cells 20 in each fuel cell stack 12 or fuel cell system 10 can be any number. For example, the number of fuel cells 20 in each fuel cell stack 12 may range from about 100 fuel cells to about 1000 fuel cells, including any specific number or range of number of fuel cells 20 comprised therein (e.g., about 200 to about 800). In an embodiment, the fuel cell system 10 may include about 20 to about 1000 fuel cells stacks 12, including any specific number or range of number of fuel cell stacks 12 comprised therein (e.g., about 200 to about 800). The fuel cells 20 in the fuel cell stacks 12 within the fuel cell module 14 may be oriented in any direction to optimize the operational efficiency and functionality of the fuel cell system 10.

The fuel cells 20 in the fuel cell stacks 12 may be any type of fuel cell 20. The fuel cell 20 may be a polymer electrolyte membrane or proton exchange membrane (PEM) fuel cell, an anion exchange membrane fuel cell (AEMFC), an alkaline fuel cell (AFC), a molten carbonate fuel cell (MCFC), a direct methanol fuel cell (DMFC), a regenerative fuel cell (RFC), a phosphoric acid fuel cell (PAFC), or a solid oxide fuel cell (SOFC). In an exemplary embodiment, the fuel cells 20 may be a polymer electrolyte membrane or proton exchange membrane (PEM) fuel cell or a solid oxide fuel cell (SOFC).

In an embodiment shown in FIG. 1C, the fuel cell stack 12 includes a plurality of proton exchange membrane (PEM) fuel cells 20. Each fuel cell 20 includes a single membrane electrode assembly (MEA) 22 and a gas diffusion layers (GDL) 24, 26 on either or both sides of the membrane electrode assembly (MEA) 22 (see FIG. 1C). The fuel cell 20 further includes a bipolar plate (BPP) 28, 30 on the external side of each gas diffusion layer (GDL) 24, 26, as shown in FIG. 1C. The above-mentioned components, in particular the bipolar plate 30, the gas diffusion layer (GDL) 26, the membrane electrode assembly (MEA) 22, and the gas diffusion layer (GDL) 24 comprise a single repeating unit 50.

The bipolar plates (BPP) 28, 30 are responsible for the transport of reactants, such as fuel 32 (e.g., hydrogen) or oxidant 34 (e.g., oxygen, air), and cooling liquid 36 (e.g., coolant and/or water) in a fuel cell 20. The bipolar plates (BPP) 28, 30 can uniformly distribute reactants 32, 34 to an active area 40 of each fuel cell 20 through oxidant flow fields 42 and/or fuel flow fields 44 formed on outer surfaces of the bipolar plates (BPP) 28, 30. The active area 40, where the electrochemical reactions occur to generate electrical power produced by the fuel cell 20, is centered, when viewing the stack 12 from a top-down perspective, within the membrane electrode assembly (MEA) 22, the gas diffusion layers (GDL) 24, 26, and the bipolar plate (BPP) 28, 30.

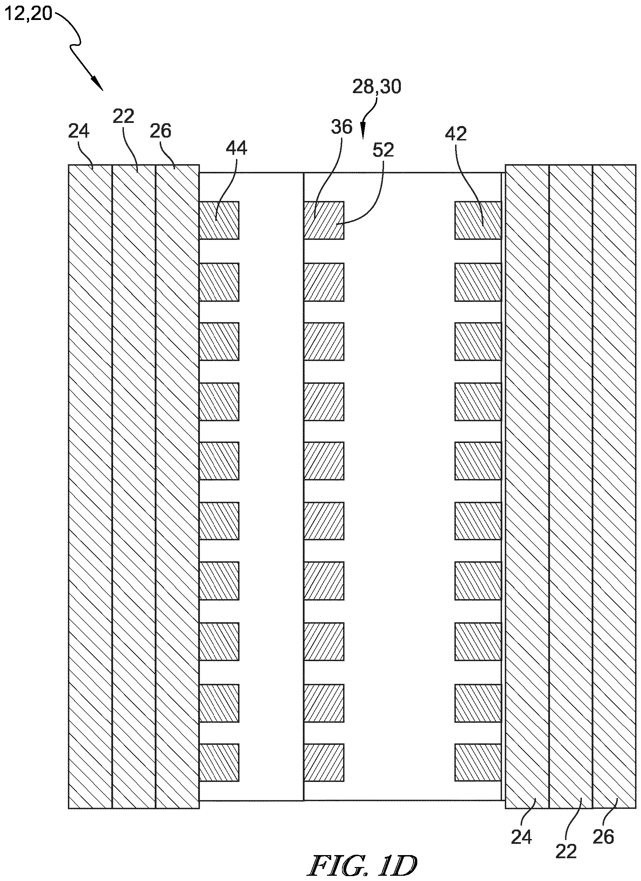

The bipolar plates (BPP) 28, 30 may each be formed to have reactant flow fields 42, 44 formed on opposing outer surfaces of the bipolar plate (BPP) 28, 30, and formed to have coolant flow fields 52 located within the bipolar plate (BPP) 28, 30, as shown in FIG. 1D. For example, the bipolar plate (BPP) 28, 30 can include fuel flow fields 44 for transfer of fuel 32 on one side of the plate 28, 30 for interaction with the gas diffusion layer (GDL) 26. The bipolar plate (BPP) 28, 30 also includes oxidant flow fields 42 for transfer of oxidant 34 on the second, opposite side of the plate 28, 30 for interaction with the gas diffusion layer (GDL) 24.

As shown in FIG. 1D, the bipolar plates (BPP) 28, 30 can further include coolant flow fields 52 formed within the plate (BPP) 28, 30, generally centrally between the opposing outer surfaces of the plate (BPP) 28, 30. The coolant flow fields 52 facilitate the flow of cooling liquid 36 through the bipolar plate (BPP) 28, 30 in order to regulate the temperature of the plate (BPP) 28, 30 materials and the reactants. The bipolar plates (BPP) 28, 30 are compressed against adjacent gas diffusion layers (GDL) 24, 26 to isolate and/or seal one or more reactants 32, 34 within their respective pathways 44, 42 to maintain electrical conductivity, which is required for robust operation of the fuel cell 20 (see FIGS. 1C and 1D).

The fuel cell system 10 described herein may be used in stationary and/or immovable power system, such as industrial applications and power generation plants. The fuel cell system 10 may also be implemented in conjunction with an air delivery system 18. Additionally, the fuel cell system 10 may also be implemented in conjunction with a hydrogen delivery system and/or a source of hydrogen 19 such as a pressurized tank, including a gaseous pressurized tank, cryogenic liquid storage tank, chemical storage, physical storage, stationary storage, an electrolysis system or an electrolyzer. In one embodiment, the fuel cell system 10 is connected and/or attached in series or parallel to a hydrogen delivery system and/or a source of hydrogen 19, such as one or more hydrogen delivery systems and/or sources of hydrogen 19 in the BOP 16 (see FIG. 1A). In another embodiment, the fuel cell system 10 is not connected and/or attached in series or parallel to a hydrogen delivery system and/or a source of hydrogen 19.

In some embodiments, the fuel cell system 10 may include an on/off valve 10XV1, a pressure transducer 10PT1, a mechanical regulator 10REG, and a venturi 10VEN arranged in operable communication with each other and downstream of the hydrogen delivery system and/or source of hydrogen 19, as shown in FIG. 1A. The pressure transducer 10PT1 may be arranged between the on/off valve 10XV1 and the mechanical regulator 10REG. In some embodiments, a proportional control valve may be utilized instead of a mechanical regulator 10REG. In some embodiments, a second pressure transducer 10PT2 is arranged downstream of the venturi 10VEN, which is downstream of the mechanical regulator 10REG.

In some embodiments, the fuel cell system 10 may further include a recirculation pump 10REC downstream of the stack 12 and operably connected to the venturi 10VEN, as shown in FIG. 1A. The fuel cell system 10 may also include a further on/off valve 10XV2 downstream of the stack 12, and a pressure transfer valve 10PSV, as shown in FIG. 1A.

The present fuel cell system 10 may also be comprised in mobile applications. In an exemplary embodiment, the fuel cell system 10 is in a vehicle and/or a powertrain 100. A vehicle 100 comprising the present fuel cell system 10 may be an automobile, a pass car, a bus, a truck, a train, a locomotive, an aircraft, a light duty vehicle, a medium duty vehicle, or a heavy-duty vehicle. Types of vehicles 100 can also include, but are not limited to commercial vehicles and engines, trains, trolleys, trams, planes, buses, ships, boats, and other known vehicles, as well as other machinery and/or manufacturing devices, equipment, installations, among others.

The vehicle and/or a powertrain 100 may be used on roadways, highways, railways, airways, and/or waterways. The vehicle 100 may be used in applications including but not limited to off highway transit, bobtails, and/or mining equipment. For example, an exemplary embodiment of mining equipment vehicle 100 is a mining truck or a mine haul truck.

In addition, it may be appreciated by a person of ordinary skill in the art that the fuel cell system 10, fuel cell stack 12, and/or fuel cell 20 described in the present disclosure may be substituted for any electrochemical system, such as an electrolysis system (e.g., an electrolyzer), an electrolyzer stack, and/or an electrolyzer cell (EC), respectively. As such, in some embodiments, the features and aspects described and taught in the present disclosure regarding the fuel cell system 10, stack 12, or cell 20 also relate to an electrolyzer, an electrolyzer stack, and/or an electrolyzer cell (EC). For example, in some embodiments, the features and attributes described herein as related to the fuel cell bipolar plates (BPP) 28, 30 may also relate to and/or be incorporated by one or more electrolyzer plates 56, 58. In further embodiments, the features and aspects described or taught in the present disclosure do not relate, and are therefore distinguishable from, those of an electrolyzer, an electrolyzer stack, and/or an electrolyzer cell (EC).

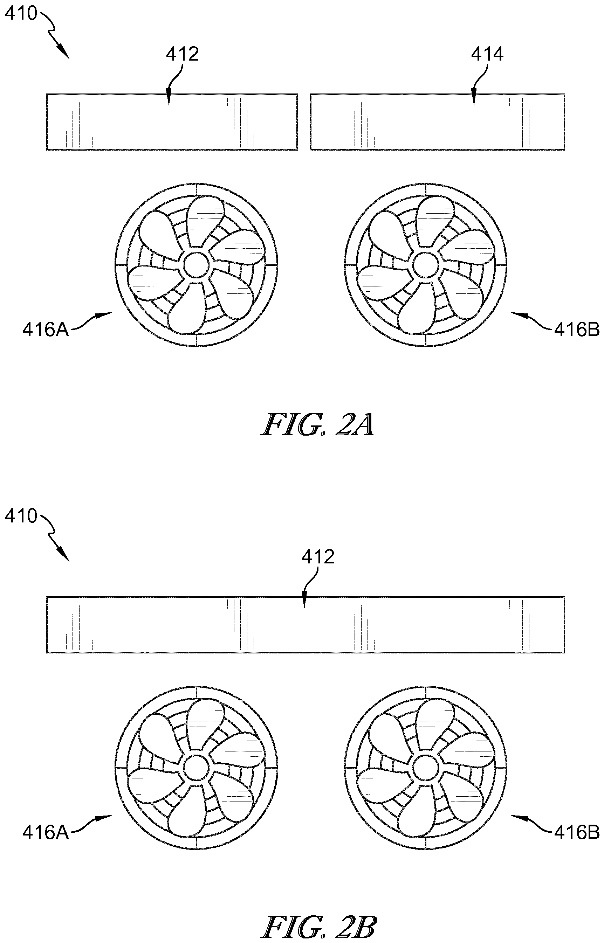

Traditional thermal management systems, such as the system 410 shown in FIG. 2A, include multiple radiators 412, 414 that are aligned in the same plane as one another, either above, below, in front of, or behind all of the one or more fans 416A, 416B comprised in system 410. In some traditional thermal management systems, more than one radiator is required and no angle is formed between the one or more radiators 412, 414. In other words, the angle between the one or more radiators 412, 414 of the system 410 of FIG. 2A is about 180 degrees or no greater than one degree (1°).

Other traditional thermal management systems, such as the system 410 shown in FIG. 2B, may include an extended radiator 412. In such a traditional system 410, only a single extended radiator 412 is included. The single extended radiator 412 is above, below, in front of, or behind all of the one or more fans 416A, 416B comprised in system 410.

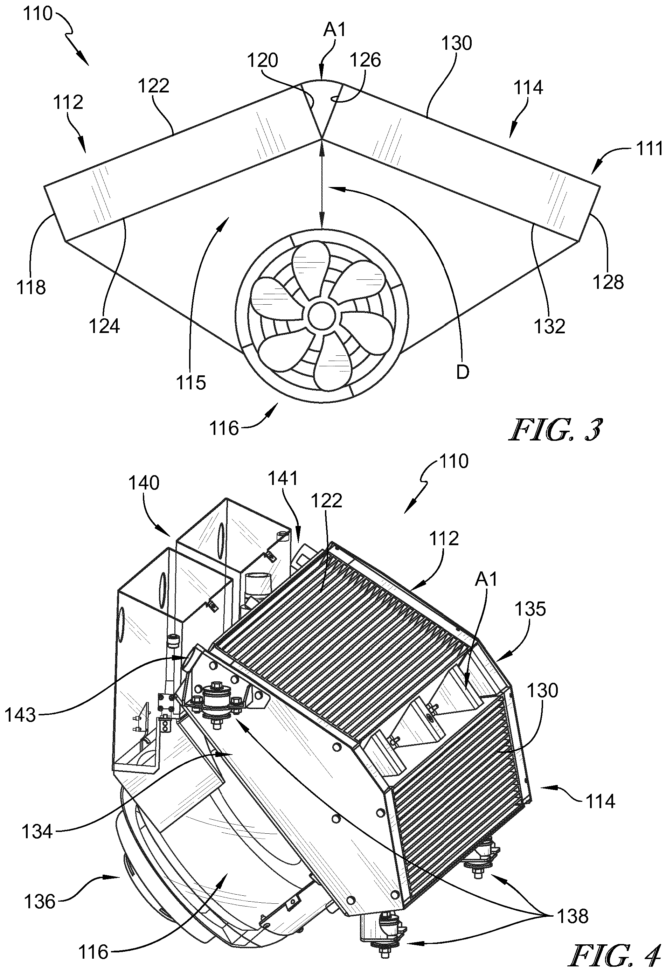

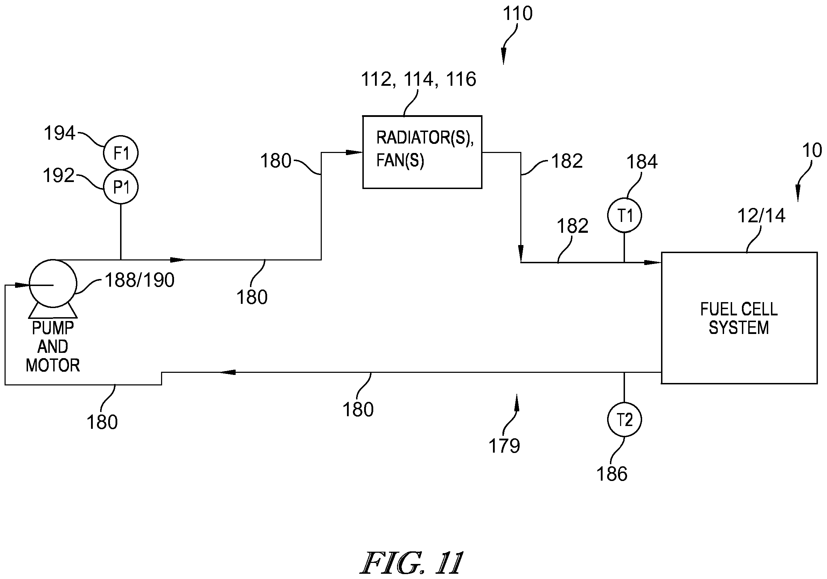

Unlike the traditional thermal management system 410 embodiments of FIGS. 2A and 2B, the present disclosure provides a thermal management system 110 for use with the fuel cell system 10, as shown in FIG. 11. FIGS. 3 and 4 illustrate the thermal management system 110. The thermal management system 110 includes more than one radiator (e.g., about two, three, four, five, or more radiators). For example, in an exemplary embodiment, the thermal management system 110 includes two radiators, including a first radiator 112, a second radiator 114, and/or one or more fans 116.

The first radiator 112 (shown in FIGS. 3, 8, and 9) is formed to include a first lateral side 118 and a second lateral side 120 opposite the first lateral side 118. The first radiator 112 is also formed to include a front side 122 and a back side 124 opposite the front side 122. Each of the front side 122 and the back side 124 extend between and interconnect the first lateral side 118 and the second lateral side 120 of the first radiator 112. Illustratively, the first radiator 112 is rectangular shaped (i.e., a rectangular prism or a cuboid), and each side of the first radiator 112 is substantially flat.

The second radiator 114 (shown in FIGS. 3, 8, and 9) is formed to include a first lateral side 126 and a second lateral side 128 opposite the first lateral side 126, as shown in FIGS. 3 and 4. The second radiator 114 is also formed to include a front side 130 and a back side 132 opposite the front side 130. Each of the front side 130 and the back side 132 extend between and interconnect the first lateral side 126 and the second lateral side 128 of the second radiator 114. Illustratively, the second radiator 114 is rectangular shaped (i.e., a rectangular prism or a cuboid), and each side of the second radiator 114 is substantially flat.

In some embodiments, the fan 116 is arranged underneath the first radiator 112 and the second radiator 114, as shown in FIGS. 3 and 4. The back side 124 of the first radiator 112 and the back side 132 of the second radiator 114 face toward the fan 116.

In some embodiments, the fan 116 is a centrifugal fan. In some embodiments, the fan 116 is an axial fan. In some embodiments, the fan 116 is a radial fan. In some embodiments, the fan 116 is any type of fan capable of pulling and/or pushing cool ambient air 176 therethrough. In some embodiments, the fan 116 is a fixed speed fan. In some embodiments, the fan 116 is a variable speed fan.

The thermal management system 110 may be used on vehicles, such as, but not limited to, trains, cars, trucks, vans, buses, boats, planes, helicopters, off-roading vehicles, all-terrain vehicles, and/or construction vehicles. In an exemplary embodiment, the thermal management system 110 is used on vehicles in which space for the thermal management system 110 is constrained. For example, in some embodiments, the thermal management system 110 is arranged, mounted, positioned, and/or located on a top side of a train. On trains, headspace is relatively limited as the train has to pass through tunnels.

As another example, in some embodiments, the thermal management system 110 is arranged behind a cab of a truck and/or in front of a trailer. To fit the thermal management system 110 within constrained spaces, a layout of the thermal management system 110, for example, the layout of the first and second radiators 112, 114, comprises an altered configuration as compared to traditional thermal management systems 410. In particular, the altered configuration of the layout of the first and second radiators 112, 114 of the system 110 comprises a first angle A1.

The second lateral side 120 of the first radiator 112 and the first lateral side 126 of the second radiator 114 are positioned and/or arranged adjacent one another, as shown in FIGS. 3 and 4. The first angle A1 is formed between the second lateral side 120 of the first radiator 112 and the first lateral side 126 of the second radiator 114, as shown in FIGS. 3, 4, and 5. Presence of the first angle A1 between the first radiator 112 and the second radiator 114 establishes a bent-knee shaped configuration, as shown in FIGS. 3-5. In this bent-knee shaped configuration, the first radiator 112 and the second radiator 114 are arranged circumferentially, at least partway, around the fan 116 to form a radiator array 111. Though described as a bent-knee shaped configuration, the first radiator 112 and the second radiator 114 are fixed relative to one another such that the radiators 112, 114 do not move relative to one another like a knee might. In some embodiments, the radiators 112, 114 do not move at all and/or are stationary.

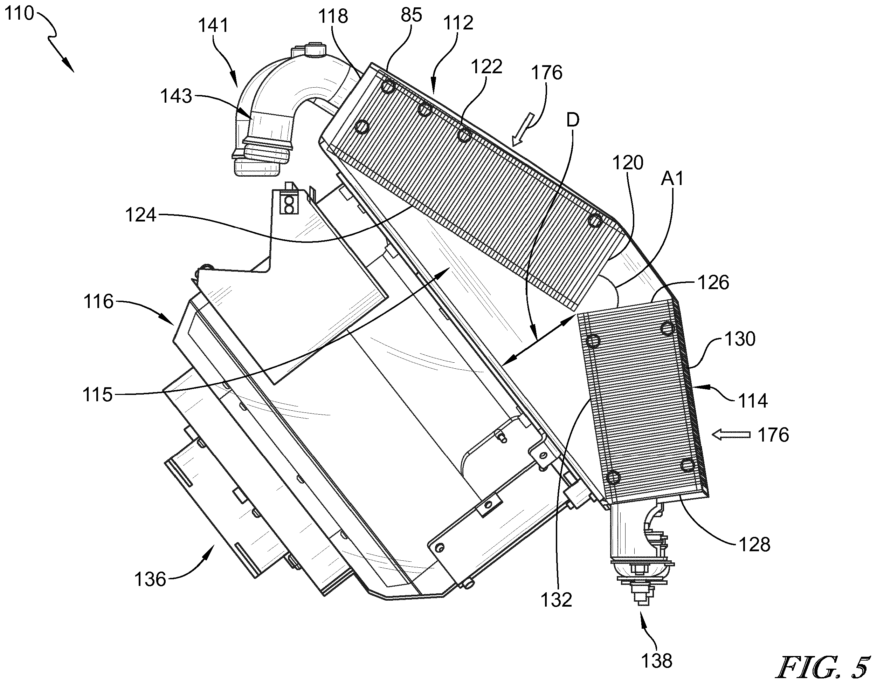

The bent-knee shaped configuration of the first and second radiators 112, 114 creates an air plenum 115 between the first and second radiators 112, 114 and the fan 116, as shown in FIGS. 3 and 5. A distance D is measured between the back sides 124, 132 of the first and second radiators 112, 114 and a front face of the fan 116 at the first angle A1, as shown in FIGS. 3 and 5. The bent-knee shaped configuration of the radiators 112, 114 allows for the air plenum 115 to be increased in size, for the distance D between the first and second radiators 112, 114 and the fan 116 to be increased, and for a surface area of the first and second radiators 112, 114 to be increased.

Therefore, the bent-knee shaped configuration of the first and second radiators 112, 114 provides many benefits to the thermal management system 110 as compared to traditional thermal management systems 410, as shown in FIGS. 2A and 2B.

For example, the larger air plenum 115 of the thermal management system 110 reduces pressure gradients of the ambient air 176 flowing through the first and second radiators 112, 114 because the ambient air 176 does not have to turn as sharply in the thermal management system 110 to enter the fan 116 as air in traditional thermal management systems 410 (see FIGS. 2A and 2B). Because the distance between the radiator(s) 412, 414 and the fans 416A, 416B is significantly less in traditional thermal management systems 410, the air flowing through the radiator(s) 412, 414 is forced to make sharp turns (e.g., air flow having angles that are greater than about 30 degrees to about 90 degrees, including any specific or range of angle comprised therein) to flow from the edges of the radiator(s) 412, 414 and into the fans 416A, 416B. The sharp turns may result in losses and/or inefficiencies in the air flow, which may reduce cooling performance of the traditional thermal management system 410. More gradual streamlines (e.g., air flows having angles ranging from about 0 degree to about 29 degrees, including any specific or range of angle comprised therein) allow the ambient air 176 to flow through the air plenum 115 and into the fan 116, which improves cooling efficiency of the thermal management system 110 and increases cooling and fuel cell performance.

The larger the distance D, the more the ambient air 176 can streamline into the fan 116 (i.e., enter the fan 116 normal to the fan 116) and efficiently cool the fuel cell system 10. For example, the ambient air 176 flows more efficiently through the first and second radiators 112, 114 and into the fan 116 of the system 110 because the ambient air 176 has more space or distance D to turn before the ambient air 176 enters the fan 116. If a radiator is too close to the fan, the air may be choked, which may decrease cooling efficiency and fuel cell performance and longevity.

In some embodiments, the distance D ranges from about 80 mm to about 200 mm, including any distance or range of distances comprised therein. In some embodiments, the distance D ranges from about 90 mm to about 190 mm, including any distance or range of distances comprised therein. In some embodiments, the distance D ranges from about 100 mm to about 180 mm, including any distance or range of distances comprised therein. In some embodiments, the distance D ranges from about 100 mm to about 170 mm, including any distance or range of distances comprised therein. In some embodiments, the distance D ranges from about 100 mm to about 160 mm, including any distance or range of distances comprised therein. In some embodiments, the distance D ranges from about 100 mm to about 150 mm, including any distance or range of distances comprised therein.

In some embodiments, the distance D is at least about 100 mm. In some embodiments, the distance D is at least about 200 mm. In some embodiments, the distance D is at least about 300 mm. In some embodiments, the distance D is at least about 400 mm.

As compared to traditional thermal management systems 410, such as those shown in FIGS. 2A and 2B, the total surface area 85 of the first and second radiators 112, 114 of the thermal management system 110 is about 5% to about 50% (including any percentage or range of percentages comprised therein) larger than the surface area of radiators 412, 414 included in traditional thermal management systems 410. The ambient air 176 flow through the first and second radiators 112, 114 is about 5% to about 20% (including any percentage or range of percentages comprised therein) greater than the air flow through radiators 412, 414 included in traditional thermal management systems 410. Similar to the larger air plenum 115, the larger surface area 85 also allows for increased ambient air 176 flow through the first and second radiators 112, 114 and into the fan 116. Increased ambient air 176 flow thereby increases the cooling capacity and/or efficiency of the thermal management system 110 and enables greater efficiency and function of the fuel cell system 10.

As suggested in FIG. 4, the first angle A1 formed between the first radiator 112 and the second radiator 114 may be dependent on the space constraints of the thermal management system 110, the fuel cell system 10, and/or the vehicle 100 or application in which the systems 110, 10 are comprised. Due to the first angle A1, the front side 122 of the first radiator 112 and the front side 130 of the second radiator 114 are not parallel to one another. In other words, the front side 122 of the first radiator 112 and the front side 130 of the second radiator 114 are in different planes, and the different planes intersect one another.

As shown in FIG. 5, the first lateral side 118 of the first radiator 112 is closer to a front face of the fan 116 than the second lateral side 120. In other words, the first lateral side 118 is a first distance away from the front face of the fan 116, and the second lateral side 120 is a second distance away from the front face of the fan 116 (i.e., the distance D). The second distance is greater than the first distance. The back side 124 of the first radiator 112 is not parallel to the front face of the fan 116.

As shown in FIG. 5, the first lateral side 126 of the second radiator 114 is farther from the front face of the fan 116 than the second lateral side 128. In other words, the first lateral side 126 is a first distance away from the front face of the fan 116 (i.e., the distance D), and the second lateral side 128 is a second distance away from the front face of the fan 116. The first distance is greater than the second distance. The back side 132 of the second radiator 114 is not parallel to the front face of the fan 116.

In some embodiments, the first angle A1 ranges from about 1 degree to about 179 degrees, including any specific or range of angles comprised therein. In some embodiments, the first angle A1 ranges from about 10 degrees to about 179 degrees, about 20 degrees to about 179 degrees, about 30 degrees to about 179 degrees, about 40 degrees to about 179 degrees, about 50 degrees to about 179 degrees, about 60 degrees to about 179 degrees, about 70 degrees to about 179 degrees, about 80 degrees to about 179 degrees, or about 90 degrees to about 179 degrees, including any range of angles or specific angles comprised therein.

In some embodiments, the first angle A1 ranges from about 10 degrees to about 170 degrees, about 10 degrees to about 160 degrees, about 10 degrees to about 150 degrees, about 10 degrees to about 140 degrees, about 10 degrees to about 130 degrees, about 10 degrees to about 120 degrees, about 10 degrees to about 110 degrees, or about 10 degrees to about 100 degrees, including any range of angles or specific angles comprised therein. In some embodiments, the first angle A1 ranges from about 20 degrees to about 170 degrees, about 30 degrees to about 160 degrees, about 40 degrees to about 150 degrees, about 40 degrees to about 140 degrees, or about 40 degrees to about 130 degrees, including any range of angles or specific angles comprised therein.

In some embodiments, the first angle A1 may range from about 40 degrees to about 120 degrees, about 40 degrees to about 110 degrees, about 40 degrees to about 100 degrees, about 40 degrees to about 90 degrees, or about 40 degrees to about 80 degrees, including any range of angles or specific angles comprised therein. In some embodiments, the first angle A1 may range from about 40 degrees to about 70 degrees, about 20 degrees to about 70 degrees, about 40 degrees to about 60 degrees, or about 30 degrees to about 60 degrees, including any range of angles or specific angles comprised therein

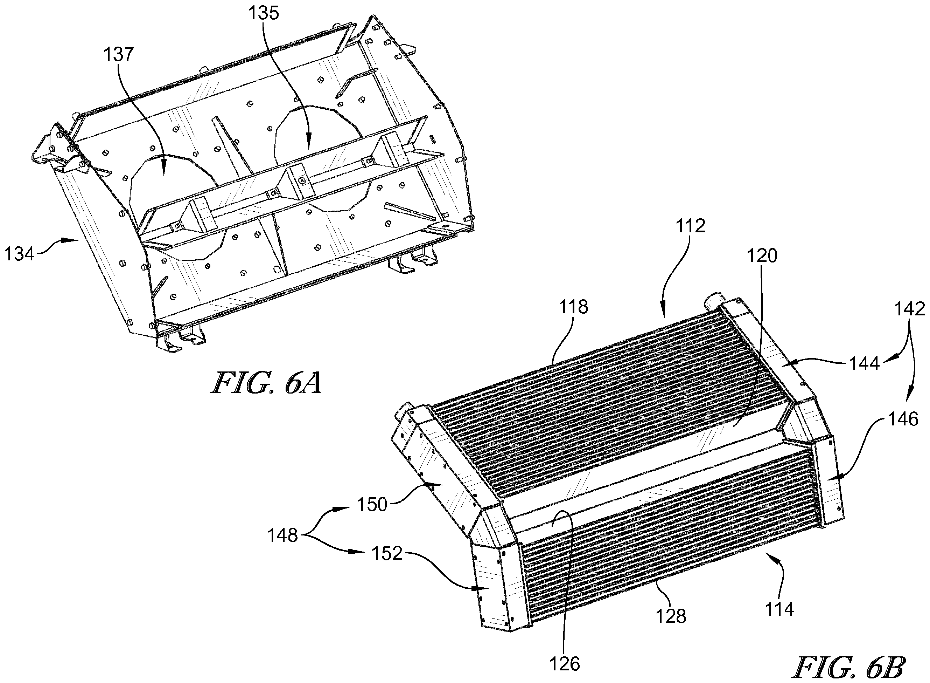

In some embodiments, the thermal management system 110 further includes a frame 134, a motor 136, and/or one or more connector feet 138, as shown in FIG. 4. The first radiator 112 and the second radiator 114 fit within the frame 134, as shown in FIGS. 6A and 6B. The fan 116 is arranged behind and/or below the frame 134, as shown in FIG. 4, to locate the frame 134 between the fan 116 and the radiators 112, 114.

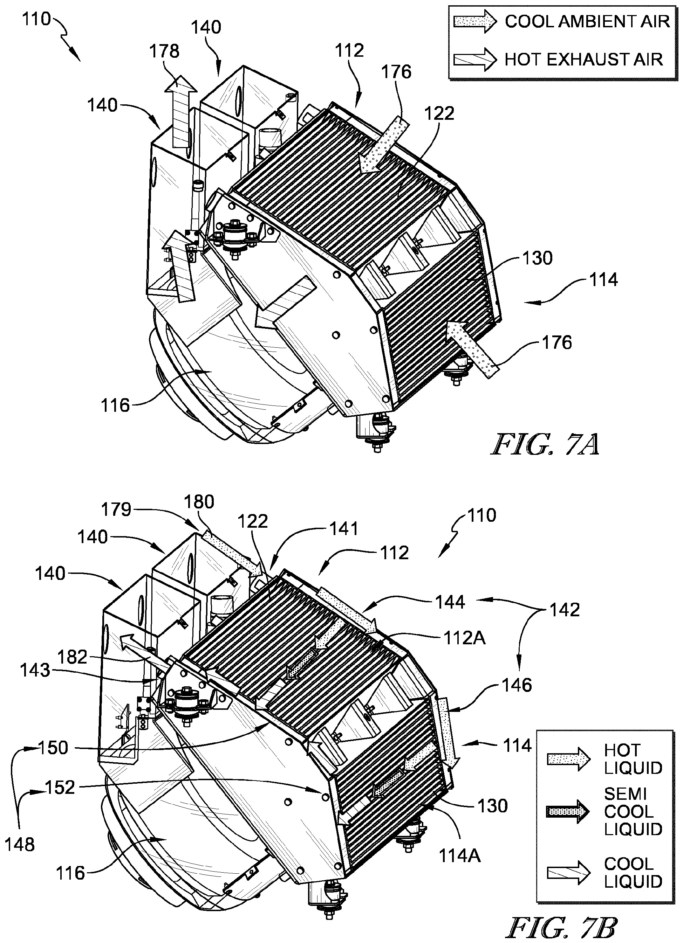

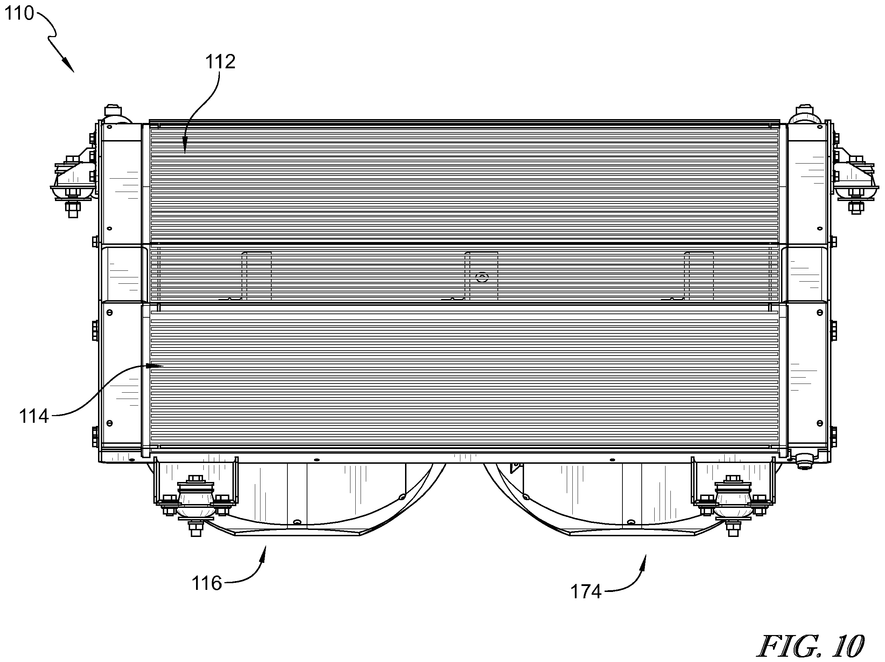

The frame 134 illustratively includes a spacer 135, as shown in FIG. 6A. The spacer 135 is arranged between the first radiator 112 and the second radiator 114 to create the first angle A1 therebetween. As assembled, the spacer 135 is arranged between the second lateral side 120 of the first radiator 112 and the first lateral side 126 of the second radiator 114, as shown in FIG. 7A. The frame 134 further includes at least one through hole 137, as shown in FIG. 6A. The fan 116 is aligned with the at least one through hole 137 so that the fan 116 can pull the ambient air 176 through the radiators 112, 114 and through the frame 134. As shown in FIG. 6A, in some embodiments, the frame 134 includes two through holes 137. In such an embodiment, the thermal management system 110 includes two fans 116 arranged next to one another (see FIG. 10).

The motor 136 runs or drives the fan 116. The motor 136 may be electrically powered, pneumatically powered, and/or powered through any other means. The connector feet 138 couple the thermal management system 110 to the vehicle 100 or any support on which the system 110 is placed. For example, in some embodiments, the connector feet 138 couple the thermal management system 110 to a main frame or chassis of the train 100.

The thermal management system 110 may be oriented in any direction on the vehicle 100. For example, in some embodiments, the thermal management system 110 is mounted, located, positioned, and/or arranged with the first and second radiators 112, 114 facing upwards. In some embodiments, the thermal management system 110 is mounted, located, positioned, and/or arranged with the first and second radiators 112, 114 facing to the right. In some embodiments, the thermal management system 110 is mounted, located, positioned, and/or arranged with the first and second radiators 112, 114 facing to the left. In some embodiments, the thermal management system 110 is mounted, located, positioned, and/or arranged with the first and second radiators 112, 114 facing to the front. In some embodiments, the thermal management system 110 is mounted, located, positioned, and/or arranged with the first and second radiators 112, 114 facing to the back.

In some embodiments, the thermal management system 110 includes an inlet manifold 142 and an outlet manifold 148 arranged on opposing ends of the radiators 112, 114, as shown in FIGS. 6B and 7B. The inlet manifold 142 and the outlet manifold 148 cooperate to form a liquid flow path 179 through the thermal management system 110. The inlet manifold 142 includes an inlet port 141 that receives hot liquid 180 from the fuel cell system 10. In some embodiments, the hot liquid 180 is the cooling liquid 36 described in reference to FIG. 1D.

The inlet manifold 142 includes an upper header 144 and a lower header 146, as shown in FIGS. 6B and 7B. The upper header 144 is coupled with and fluidly connected to the first radiator 112. The lower header 146 is coupled with and fluidly connected to the second radiator 114.

The hot liquid 180 from the fuel cell system 10 flows through the inlet port 141 and into the upper header 144. From the upper header 144, a first portion of the hot liquid 180 flows into fins 112A of the first radiator 112. A second portion of the hot liquid 180 flows into the lower header 146 from the upper header 144.

From the lower header 146, the second portion of the hot liquid 180 flows into fins 114A of the second radiator 114. The first and second portions of the hot liquid 180 flow in parallel through the first radiator 112 and the second radiator 114 from right to left. If a third radiator 154 is included in the thermal management system 110, the portions of the hot liquid 180 flow in parallel through the first radiator 112, the second radiator 114, and the third radiator 154 from right to left. Illustratively, the inlet manifold 142 is arranged on the right side of the radiators 112, 114, and the outlet manifold 148 is arranged on the left side of the radiators 112, 114. The inlet port 141 and the outlet port 143 are both arranged adjacent the first lateral side 118 of the first radiator 112.

The fan 116 draws cool ambient air 176 through an ambient air flow path 196, as shown in FIG. 7A. The cool ambient air 176 is drawn into the front side 122 of the first radiator 112 and into the front side 130 of the second radiator 114. As the cool ambient air 176 flows through the first and second radiators 112, 114, the cool ambient air 176 cools the hot liquid 180 flowing across the first and second radiators 112, 114 to form cool liquid 182, as shown in FIG. 7B. Specifically, the first portion of the hot liquid 180 becomes a first portion of the cool liquid 182 as the first portion of the hot liquid 180 flows across the first radiator 112, and the second portion of the hot liquid 180 becomes a second portion of the cool liquid 182 as the second portion of the hot liquid 180 flows across the second radiator 114.

As the cool ambient air 176 cools the hot liquid 180, the cool ambient air 176 picks up heat from the hot liquid 180 to form hot exhaust air 178 (see FIG. 7A). The hot exhaust air 178 flows through the fan 116 and out of an exhaust duct 140 included in the thermal management system 110, as shown in FIG. 7A. The hot exhaust air 178 flows out of the system 110 to an external environment.

From the fins 112A, 114A, the cool liquid 182 flows into the outlet manifold 148, as shown in FIGS. 6B and 7B. The outlet manifold 148 includes an upper header 150, a lower header 152, and an outlet port 143. The upper header 150 is coupled with and fluidly connected to the first radiator 112. The lower header 152 is coupled with and fluidly connected to the second radiator 114. The outlet port 143 is coupled with and fluidly connected to the upper header 150.

The second portion of the cool liquid 182 flows out of the fins 114A of the second radiator 114 and into the lower header 152, as shown in FIG. 7B. The first portion of the cool liquid 182 flows out of the fins 112A of the first radiator 112 and into the upper header 150. The lower header 152 is fluidly connected to the upper header 150 so that the second portion of the cool liquid 182 in the lower header 152 flows into the upper header 150 to mix with the first portion of the cool liquid 182 in the upper header 150.

The cool liquid 182 then flows from the upper header 150 out of the outlet port 143 and is recirculated to the fuel cell system 10. When recirculated to the fuel cell system 10, the cool liquid 182 picks up heat from the fuel cell system 10 and returns to the inlet port 141 for cooling. The liquid flow path 179 is a closed loop, as shown in FIG. 11, as the same liquid 180, 182 continues to be pumped and recirculated through the fuel cell system 10 and the thermal management system 110 repeatedly.

In the illustrative embodiment, the liquid 180, 182 is a coolant of the fuel cell system 10, such as the coolant 36 described in reference to FIG. 1D. The liquid 180, 182 may be any type of coolant. Illustrative liquid 180, 182 is water, ethylene glycol, or any other type of coolant.

As shown and described, the fan 116 pulls the cool ambient air 176 through the first and second radiators 112, 114 such that the cool ambient air 176 flows through the front side 122, 130 to the back side 124, 132 of the first and second radiators 112, 114, respectively, as shown in FIGS. 3 and 4. In alternative embodiments, the fan 116 pushes the cool ambient air 176 through the first and second radiators 112, 114. In such an embodiment, the fan 116 pulls the cool ambient air 176 through the exhaust duct 140, through the fan 116, and through the first and second radiators 112, 114 from the back side 124, 132 to the front side 122, 130 of the first and second radiators 112, 114, respectively, where the hot exhaust air 178 is exhausted to the external environment.

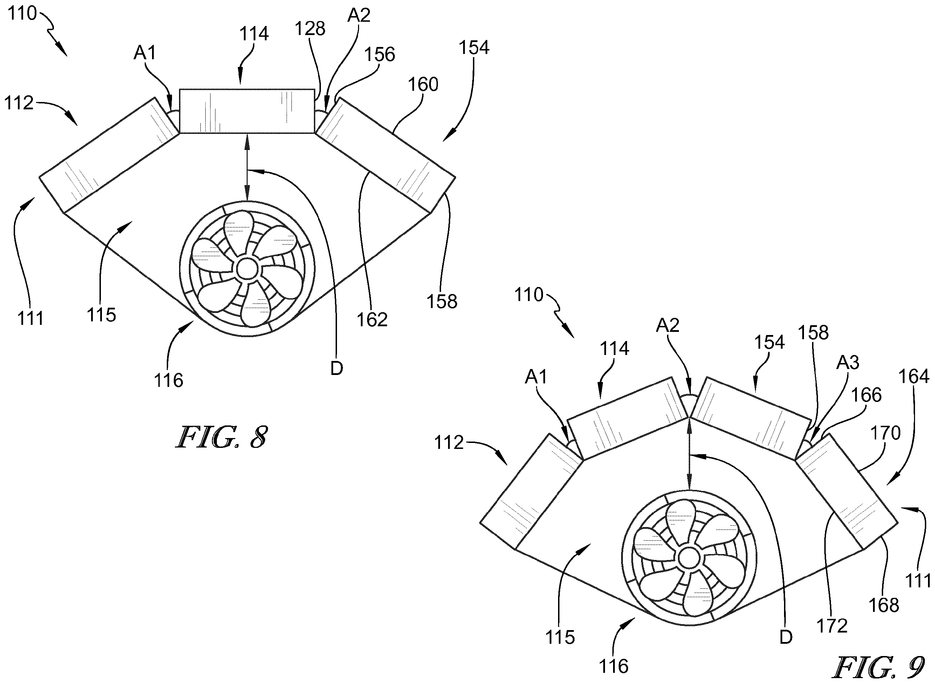

As shown in FIGS. 8 and 9, in some embodiments, the thermal management system 110 includes additional radiators, meaning more than two radiators. For example, as shown in FIG. 8, the thermal management system 110 includes a third radiator 154. Illustratively, the third radiator 154 is rectangular shaped (i.e., a rectangular prism or a cuboid), and each side of the third radiator 154 is substantially flat.

The third radiator 154 is formed to include a first lateral side 156 and a second lateral side 158 opposite the first lateral side 156. The third radiator 154 is formed to include a front side 160 and a back side 162 opposite the front side 160. Each of the front side 160 and the back side 162 extend between and interconnect the first lateral side 156 and the second lateral side 158 of the third radiator 154.

The first lateral side 156 of the third radiator 154 is arranged and/or positioned adjacent the second lateral side 128 of the second radiator 114, as shown in FIG. 8. A second angle A2 is formed between the second lateral side 128 of the second radiator 114 and the first lateral side 156 of the third radiator 154, as shown in FIG. 8. The first radiator 112, the second radiator 114, and the third radiator 154 are arranged circumferentially, at least partway, around the fan 116 to form the radiator array 111. The second angle A2 formed between the second radiator 114 and the third radiator 154 may be dependent on the space constraints of the thermal management system 110. In some embodiments, the second angle A2 has the same dimensions as the first angle A1 described above. In some embodiments, the second angle A2 has different dimensions than the first angle A1, but is one of the dimensions described above in reference to the first angle A1. Similarly, in some embodiments, the distance D of the system 110 shown in FIG. 8 comprising three radiators 112, 114, 154 is the same distance D, as described above.

Due to the second angle A2, the front side 130 of the second radiator 114 and the front side 160 of the third radiator 154 are not parallel to one another. In other words, the front side 130 of the second radiator 114 and the front side 160 of the third radiator 154 are in different planes, and the different planes intersect one another.

As shown in FIG. 9, some embodiments of the thermal management system 110 include a fourth radiator 164. Illustratively, the fourth radiator 164 is rectangular shaped (i.e., a rectangular prism or a cuboid), and each side of the fourth radiator 164 is substantially flat.

The fourth radiator 164 is formed to include a first lateral side 166 and a second lateral side 168 opposite the first lateral side 166. The fourth radiator 164 is formed to include a front side 170 and a back side 172 opposite the front side 170. Each of the front side 170 and the back side 172 extend between and interconnect the first lateral side 166 and the second lateral side 168.

The first lateral side 166 of the fourth radiator 164 is arranged and/or positioned adjacent the second lateral side 158 of the third radiator 154, as shown in FIG. 9. A third angle A3 is formed between the second lateral side 158 of the third radiator 154 and the first lateral side 166 of the fourth radiator 164, as shown in FIG. 9. The first radiator 112, the second radiator 114, the third radiator 154, and the fourth radiator 164 are arranged circumferentially at least partway around the fan 116 to form the radiator array 111.

Due to the third angle A3, the front side 160 of the third radiator 154 and the front side 170 of the fourth radiator 164 are not parallel to one another. In other words, the front side 160 of the third radiator 154 and the front side 170 of the fourth radiator 164 are in different planes, and the different planes intersect one another.

The third angle A3 formed between the third radiator 154 and the fourth radiator 164 may be dependent on the space constraints of the thermal management system 110. In some embodiments, the third angle A3 has the same dimensions as the first angle A1 and/or the second angle A2, described above. In some embodiments, the third angle A3 has different dimensions than the first angle A1 and/or the second angle A2, but is one of the dimensions described above in reference to the first angle A1. Similarly, in some embodiments, the distance D of the system 110 shown in FIG. 9 comprising four radiators 112, 114, 154, 164 is the same distance D, as described above.

In some embodiments, the radiators 112, 114 extend between about 90 degrees and about 180 degrees circumferentially around the fan 116, including any range of angles or specific angles comprised therein. In some embodiments, the radiators 112, 114 extend between about 90 degrees and about 360 degrees circumferentially around the fan 116, including any range of angles or specific angles comprised therein. By way of example, the radiators 112, 114 may extend 360 degrees circumferentially around the fan 116 if the thermal management system 110 is used in a stationary setting. In some embodiments, the radiators 112, 114 extend between about 90 degrees and about 270 degrees circumferentially around the fan 116, including any range of angles or specific angles comprised therein. In some embodiments, the radiators 112, 114 extend at least 90 degrees circumferentially around the fan 116. In some embodiments, the radiators 112, 114 extend at least 100 degrees circumferentially around the fan 116. As used in this paragraph, the term "radiators" includes all of the radiators included in the thermal management system 110 (i.e., the first and second radiators 112, 114; the first, second, and third radiators 112, 114, 154; the first, second, third, and fourth radiators 112, 114, 154, 164; the first, second, third, fourth, and N radiators 112, 114, 154, 164, N).

The thermal management system 110 may include any number of radiators. For example, the thermal management system 110 may comprise a range of about one (1) to about ten (10) radiators, including any number comprised therein. Illustrative examples of the present system 110 described herein provide two to four radiators. The number of radiators may be dependent on the space constraints of the system 110 and the amount of cooling needed for the fuel cell system 10.

In the illustrative embodiment, the thermal management system 110 includes a single fan (i.e., the fan 116). In some embodiments, the thermal management system 110 includes additional fans or more than one fan, such as a first fan 116 and a second fan 174, as shown in FIG. 10. For example, the thermal management system 110 may comprise a range of about one (1) to about ten (10) fans, including any number comprised therein.

In some embodiments, the thermal management system 110 includes a first temperature sensor 184 and/or a second temperature sensor 186, as shown in FIG. 11. The first temperature sensor 184 measures, determines, detects, and/or senses a temperature of the cool liquid 182 flowing into the fuel cell system 10. The second temperature sensor 186 measures, determines, detects, and/or senses a temperature of the hot liquid 180 flowing out of the fuel cell system 10 and toward the thermal management system 110 for recirculation.

In some embodiments, the thermal management system 110 includes a pump 188 and/or a motor 190, as shown in FIG. 11. The pump 188 pumps and/or directs the hot liquid 180 from the fuel cell system 10 toward the radiators 112, 114 to be cooled. The motor 190 runs and/or drives the pump 188.

In some embodiments, the thermal management system 110 includes a liquid pressure sensor 192 and/or a liquid flow sensor 194, as shown in FIG. 11. The liquid pressure sensor 192 and the liquid flow sensor 194 are positioned between the pump 188 and the radiators 112, 114 to detect a pressure and a flow rate, respectively, of the hot liquid 180 leaving the pump 188 and flowing into the radiators 112, 114. The pressure measurement, calculation, and/or determination of the liquid pressure sensor 192 may indicate whether the pump 188 is on and working properly. The flow measurement, calculation, and/or determination of the liquid flow sensor 194 may indicate whether the pump 188 is on and working properly. The flow measurement, calculation, and/or determination of the liquid flow sensor 194 may determine, sense, measure, and/or calculate if there is a blockage in the thermal management system 110.

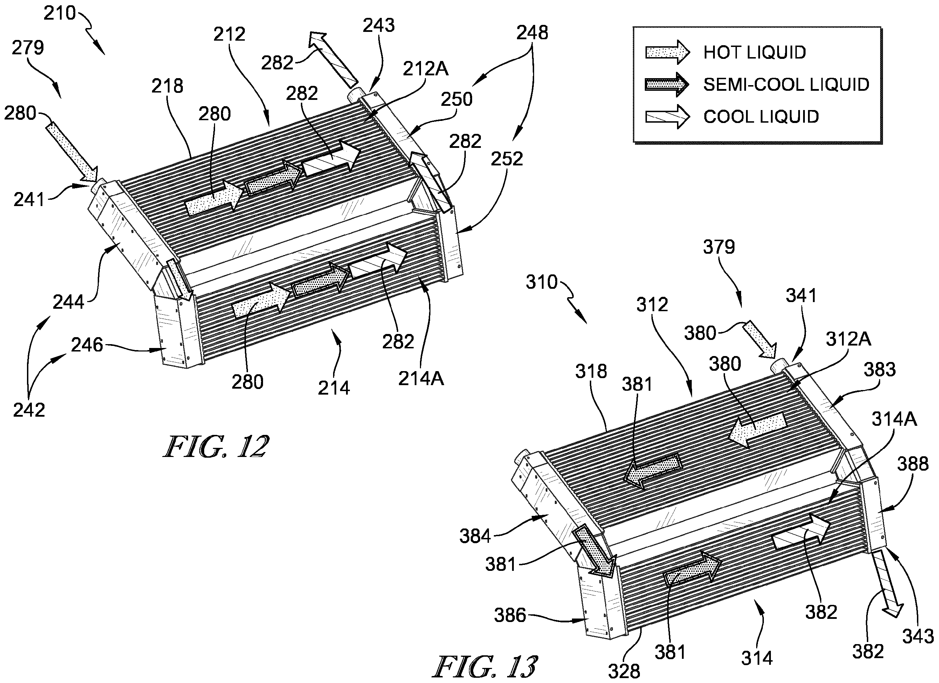

The present disclosure provides alternative systems and methods of cooling liquid of the fuel cell system 10. FIG. 12 illustrates another embodiment of a thermal management system 210 that is substantially similar to the thermal management system 110. However, the thermal management system 210 includes a different liquid flow path 279. In the absence of disclosure to the contrary, the features and components of the thermal management system 110 are applicable and present for the thermal management system 210.

The thermal management system 210 includes an inlet manifold 242 and an outlet manifold 248, as shown in FIG. 12. The inlet manifold 242 includes an inlet port 241 that receives hot liquid 280 from the fuel cell system 10. The inlet manifold 242 further includes an upper header 244 and a lower header 246, as shown in FIG. 12.

The upper header 244 is coupled with and fluidly connected to a first radiator 212, as shown in FIG. 12. The lower header 246 is coupled with and fluidly connected to a second radiator 214. The hot liquid 280 from the fuel cell system 10 flows through the inlet port 241 and into the upper header 244. From the upper header 244, a first portion of the hot liquid 280 flows into fins 212A of the first radiator 212, and a second portion of the hot liquid 280 flows into the lower header 246.

From the lower header 246, the second portion of the hot liquid 280 flows into fins 214A of the second radiator 214, as shown in FIG. 12. The first and second portions of the hot liquid 280 flows in parallel through the first radiator 212 and the second radiator 214 from left to right. If a third radiator, such as the third radiator 154, is included in the thermal management system 210, the portions of the hot liquid 280 flow in parallel through the first radiator 212, the second radiator 214, and the third radiator 154 from left to right. Illustratively, the inlet manifold 242 is arranged on the left side of the radiators 212, 214, and the outlet manifold 248 is arranged on the right side of the radiators 212, 214. The inlet port 241 and the outlet port 243 are both arranged adjacent a first lateral side 218 of the first radiator 212.

The fan (not shown, though the same as the fan 116) draws cool ambient air into the first radiator 212 and into the second radiator 214. As the cool ambient air flows through the first radiator 212, the cool ambient air cools the first portion of the hot liquid 280 flowing across the first radiator 212 through the fins 212A to form a first portion of cool liquid 282. As the cool ambient air flows through the second radiator 214, the cool ambient air cools the second portion of the hot liquid 280 flowing across the second radiator 214 through the fins 214A to form a second portion of the cool liquid 282.

The cool liquid 282 flows into the outlet manifold 248, as shown in FIG. 12. The outlet manifold 248 includes an upper header 250, a lower header 252, and an outlet port 243. The upper header 250 is coupled with and fluidly connected to the first radiator 212. The lower header 252 is coupled with and fluidly connected to the second radiator 214. The outlet port 243 is coupled with and fluidly connected to the upper header 250.

The second portion of the cool liquid 282 flows out of the fins 214A of the second radiator 214 and into the lower header 252, as shown in FIG. 12. The first portion of the cool liquid 282 flows out of the fins 212A of the first radiator 212 and into the upper header 250. The lower header 252 is fluidly connected to the upper header 250 so that the second portion of the cool liquid 282 in the lower header 252 flows into the upper header 250 to mix with the first portion of the cool liquid 282. The cool liquid 282 then flows from the upper header 250 out of the outlet port 243 and is recirculated to the fuel cell system 10. The cool liquid 282 picks up heat from the fuel cell system 10 and returns to the inlet port 241.

The present disclosure provides alternative systems and methods of cooling liquid of the fuel cell system 10. FIG. 13 illustrates another embodiment of a thermal management system 310 that is substantially similar to the thermal management system 110. However, the thermal management system 310 includes a different liquid flow path 379 for hot liquid 380. In the absence of disclosure to the contrary, the features and components of the thermal management system 110 are applicable and present for the thermal management system 310.

The thermal management system 310 includes a first header 383, a second header 384, a third header 386, and a fourth header 388, as shown in FIG. 13. The thermal management system 310 includes an inlet port 341 that receives the hot liquid 380 from the fuel cell system 10. The thermal management system 310 includes an outlet port 343 that cool liquid 382 exits from to recirculate to the fuel cell system 10.

The first header 383 is coupled with and fluidly connected to a first radiator 312, as shown in FIG. 13. The second header 384 is coupled with and fluidly connected to the first radiator 312. The third header 386 is coupled with and fluidly connected to a second radiator 314. The fourth header 388 is coupled with and fluidly connected to the second radiator 314.

The hot liquid 380 from the fuel cell system 10 flows through the inlet port 341 and into the first header 383, as shown in FIG. 13. From the first header 383, all of the hot liquid 380 flows into fins 312A of the first radiator 312 to flow across the first radiator 312.

The fan (not shown, though the same as the fan 116) draws cool ambient air into the first radiator 312 and into the second radiator 314. As the cool ambient air flows through the first radiator 312, the cool ambient air cools the hot liquid 380 flowing across the first radiator 312 to form partially cooled liquid 381. The hot liquid 380 cools partially as it flows across the first radiator 312 to form the partially cooled liquid 381. The partially cooled liquid 381 then flows into the second header 384 from the fins 312A of the first radiator 312. The second header 384 is fluidly coupled with the third header 386 to transmit and/or direct the partially cooled liquid 381 from the second header 384 to the third header 386. The partially cooled liquid 381 flows from the third header 386 into fins 314A of the second radiator 314.

The fan (not shown, though the same as the fan 116) draws cool ambient air into the first radiator 312 and into the second radiator 314. As the cool ambient air flows through the second radiator 314, the cool ambient air cools the partially cooled liquid 381 flowing across the second radiator 314 to form cool liquid 382. The cool liquid 382 flows into the fourth header 388 from the fins 314A of the second radiator 314 and out of the outlet port 343, as shown in FIG. 13.

The liquid 380, 381, 382 flows in series through the first radiator 312 and then through the second radiator 314. As shown in FIG. 13, the hot liquid 380 flows through the first radiator 312 from right to left and then the partially cooled liquid 381 flows through the second radiator 314 from left to right. However, in some embodiments, the flow may be reversed such that the hot liquid 380 flows through the first radiator 312 from left to right and then the partially cooled liquid 381 flows through the second radiator 314 from right to left. In some embodiments, the hot liquid 380 flows through the second radiator 314 and then the partially cooled liquid 381 flows through the first radiator 312.

If a third radiator 154 is included in the thermal management system 310, the hot liquid 380 flows in series through the first radiator 312, then through the second radiator 314, and then through the third radiator 154. The liquid flow path 179, 279, 379 may be dependent on the location of other components of the fuel cell system 10. For example, the inlet port 141, 241, 341 may be positioned near the pump 188 and/or the motor 190 (see FIG. 11) such that the location of the pump 188 and/or the motor 190 dictates the liquid flow path 179, 279, 379.

Illustratively, the inlet port 341 is arranged adjacent a first lateral side 318 of the first radiator 312, and the outlet port 343 is arranged adjacent a second lateral side 328 of the second radiator 314.

A method of cooling liquid 180, 280, 380 of the fuel cell system 10 is also described herein. The method includes arranging a first radiator 112, 212, 312 adjacent a second radiator 114, 214, 314 to form a first angle A1 therebetween. The method includes positioning a fan 116 underneath the first radiator 112, 212, 312 and the second radiator 114, 214, 314. The method includes flowing hot liquid 180, 280, 380 from the fuel cell system 10 through the first radiator 112, 212, 312 and the second radiator 114, 214, 314. The method includes drawing ambient air 176 into the first radiator 112, 212, 312 and the second radiator 114, 214, 314 via the fan 116.

The method includes cooling the hot liquid 180, 280, 380 with the ambient air 176 to form a cool liquid 182, 282, 382. The method includes recirculating the cool liquid 182, 282, 382 to the fuel cell system 10. The method includes forming the first angle A1 to range from about 20 degrees to about 70 degrees. The method includes forming the first angle A1 to range from about 30 degrees to about 60 degrees.

The method includes forming the first angle A1 to range from about 10 degrees to about 170 degrees. The method includes creating a distance D between the fan 116 and each of the first radiator 112, 212, 312 and the second radiator 114, 214, 314 at the first angle A1, the distance D being at least 100 mm. The method includes arranging a third radiator 154 adjacent the second radiator 114, 214, 314 to form a second angle A2 therebetween. The method further includes arranging a fourth radiator 164 adjacent the third radiator 154 to form a third angle A3 therebetween. The method includes mounting the first radiator 112, 212, 312 and the second radiator 114, 214, 314 in a frame 134, positioning the frame 134 above the fan 116, and mounting the frame 134 on a surface of a vehicle 100 (e.g., a top surface of a vehicle 100).

The following described aspects of the present invention are contemplated and nonlimiting:

A first aspect of the present invention relates to a thermal management system for cooling a liquid of a fuel cell system. The thermal management system includes a first radiator, a second radiator, and a fan. The first radiator is configured to transmit at least a first portion of the liquid of the fuel cell system therethrough for cooling of the at least a first portion of the liquid. The first radiator including a first lateral side and a second lateral side opposite the first lateral side. The second radiator is configured to transmit at least a second portion of the liquid of the fuel cell system therethrough for cooling of the at least a second portion of the liquid. The second radiator includes a first lateral side and a second lateral side opposite the first lateral side. The second lateral side of the first radiator is positioned adjacent the first lateral side of the second radiator to form a first angle therebetween. The fan is arranged underneath the first radiator and the second radiator and is configured to draw ambient air into the first radiator and the second radiator to cool the liquid of the fuel cell system passing through the first radiator and the second radiator.

A second aspect of the present invention relates to a method of cooling a liquid of a fuel cell system. The method includes arranging a first radiator adjacent a second radiator to form a first angle therebetween. The method includes positioning a fan underneath the first radiator and the second radiator. The method includes flowing the liquid from the fuel cell system through the first radiator and the second radiator. The method includes drawing ambient air into the first radiator and the second radiator via the fan. The method includes cooling the liquid with the ambient air to form a cool liquid. The method includes recirculating the cool liquid to the fuel cell system.

In the first aspect of the present invention, the first angle formed between the second lateral side of the first radiator and the first lateral side of the second radiator may range from about 10 degrees to about 170 degrees. In the first aspect of the present invention, the first angle formed between the second lateral side of the first radiator and the first lateral side of the second radiator may range from about 30 degrees to about 60 degrees.

In the first aspect of the present invention, the first radiator may include a front face extending between and interconnecting the first lateral side and the second lateral side and a back face opposite the front face and facing toward the fan. In the first aspect of the present invention, the second radiator may include a front face extending between and interconnecting the first lateral side and the second lateral side and a back face opposite the front face and facing toward the fan. In the first aspect of the present invention, a distance between the fan and the back face of each of the first radiator and the second radiator at the first angle may be at least about 100 mm. In the first aspect of the present invention, the distance may be at least about 200 mm.

In the first aspect of the present invention, the system may further include a third radiator configured to transmit at least a third portion of the liquid of the fuel cell system therethrough for cooling of the at least a third portion of the liquid. In the first aspect of the present invention, the third radiator may include a first lateral side and a second lateral side opposite the first lateral side. In the first aspect of the present invention, the second lateral side of the second radiator may be positioned adjacent the first lateral side of the third radiator to form a second angle therebetween.

In the first aspect of the present invention, the system may further include a fourth radiator configured to transmit at least a fourth portion of the liquid of the fuel cell system therethrough for cooling of the at least a fourth portion of the liquid. In the first aspect of the present invention, the fourth radiator may include a first lateral side and a second lateral side opposite the first lateral side. In the first aspect of the present invention, the second lateral side of the third radiator may be positioned adjacent the first lateral side of the fourth radiator to form a third angle therebetween.

In the first aspect of the present invention, the first radiator and the second radiator may extend at least 100 degrees circumferentially around the fan. In the first aspect of the present invention, the system may further include a frame arranged between each of the first radiator and the second radiator and the fan. In the first aspect of the present invention, the frame may be coupled to a top surface of a vehicle so that the first radiator and the second radiator are each exposed to ambient air. In the first aspect of the present invention, the vehicle may be a train or a truck.

In the second aspect of the present invention, the method may further comprise forming the first angle to range from about 10 degrees to about 170 degrees. In the second aspect of the present invention, the method may further comprise forming the first angle to range from about 30 degrees to about 60 degrees.

In the second aspect of the present invention, the method may further comprise creating a distance between the fan and each of the first radiator and the second radiator at the first angle, the distance being at least 100 mm. In the second aspect of the present invention, the method may further comprise arranging a third radiator adjacent the second radiator to form a second angle therebetween. In the second aspect of the present invention, the second angle may range from about 10 degrees to about 170 degrees.

In the second aspect of the present invention, the method may further comprise arranging a fourth radiator adjacent the third radiator to form a third angle therebetween. In the second aspect of the present invention, the third angle ranges from about 10 degrees to about 170 degrees. In the second aspect of the present invention, the method may further comprise mounting the first radiator and the second radiator in a frame, positioning the frame above the fan, and mounting the frame on a top surface of a vehicle. In the second aspect of the present invention, the vehicle may be a train.

The features illustrated or described in connection with one exemplary embodiment may be combined with any other feature or element of any other embodiment described herein. Such modifications and variations are intended to be included within the scope of the present disclosure. Further, a person skilled in the art will recognize that terms commonly known to those skilled in the art may be used interchangeably herein.

The above embodiments are described in sufficient detail to enable those skilled in the art to practice what is claimed and it is to be understood that logical, mechanical, and electrical changes may be made without departing from the spirit and scope of the claims. The detailed description is, therefore, not to be taken in a limiting sense.

As used herein, an element or step recited in the singular and proceeded with the word "a" or "an" should be understood as not excluding plural of said elements or steps, unless such exclusion is explicitly stated. Furthermore, references to "one embodiment" of the presently described subject matter are not intended to be interpreted as excluding the existence of additional embodiments that also incorporate the recited features. Specified numerical ranges of units, measurements, and/or values comprise, consist essentially or, or consist of all the numerical values, units, measurements, and/or ranges including or within those ranges and/or endpoints, whether those numerical values, units, measurements, and/or ranges are explicitly specified in the present disclosure or not.

Unless defined otherwise, technical and scientific terms used herein have the same meaning as is commonly understood by one of ordinary skill in the art to which this disclosure belongs. The terms "first," "second," "third" and the like, as used herein do not denote any order or importance, but rather are used to distinguish one element from another. The term "or" is meant to be inclusive and mean either or all of the listed items. In addition, the terms "connected" and "coupled" are not restricted to physical or mechanical connections or couplings, and can include electrical connections or couplings, whether direct or indirect.

Moreover, unless explicitly stated to the contrary, embodiments "comprising," "including," or "having" an element or a plurality of elements having a particular property may include additional such elements not having that property. The term "comprising" or "comprises" refers to a composition, compound, formulation, or method that is inclusive and does not exclude additional elements, components, and/or method steps. The term "comprising" also refers to a composition, compound, formulation, or method embodiment of the present disclosure that is inclusive and does not exclude additional elements, components, or method steps.

The phrase "consisting of" or "consists of' refers to a compound, composition, formulation, or method that excludes the presence of any additional elements, components, or method steps. The term "consisting of" also refers to a compound, composition, formulation, or method of the present disclosure that excludes the presence of any additional elements, components, or method steps.

The phrase "consisting essentially of" or "consists essentially of' refers to a composition, compound, formulation, or method that is inclusive of additional elements, components, or method steps that do not materially affect the characteristic(s) of the composition, compound, formulation, or method. The phrase "consisting essentially of" also refers to a composition, compound, formulation, or method of the present disclosure that is inclusive of additional elements, components, or method steps that do not materially affect the characteristic(s) of the composition, compound, formulation, or method steps.

Approximating language, as used herein throughout the specification and claims, may be applied to modify any quantitative representation that could permissibly vary without resulting in a change in the basic function to which it is related. Accordingly, a value modified by a term or terms, such as "about," and "substantially" is not to be limited to the precise value specified. In some instances, the approximating language may correspond to the precision of an instrument for measuring the value. Here and throughout the specification and claims, range limitations may be combined and/or interchanged. Such ranges are identified and include all the sub-ranges contained therein unless context or language indicates otherwise.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances, the modified term may sometimes not be appropriate, capable, or suitable.

It is to be understood that the above description is intended to be illustrative, and not restrictive. For example, the above-described embodiments (and/or aspects thereof) may be used individually, together, or in combination with each other. In addition, many modifications may be made to adapt a particular situation or material to the teachings of the subject matter set forth herein without departing from its scope. While the dimensions and types of materials described herein are intended to define the parameters of the disclosed subject matter, they are by no means limiting and are exemplary embodiments. Many other embodiments will be apparent to those of skill in the art upon reviewing the above description. The scope of the subject matter described herein should, therefore, be determined with reference to the appended claims, along with the full scope of equivalents to which such claims are entitled.

This written description uses examples to disclose several embodiments of the subject matter set forth herein, including the best mode, and also to enable a person of ordinary skill in the art to practice the embodiments of disclosed subject matter, including making and using the devices or systems and performing the methods. The patentable scope of the subject matter described herein is defined by the claims, and may include other examples that occur to those of ordinary skill in the art. Such other examples are intended to be within the scope of the claims if they have structural elements that do not differ from the literal language of the claims, or if they include equivalent structural elements with insubstantial differences from the literal languages of the claims.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. A thermal management system for cooling a liquid of a fuel cell system, the thermal management system comprising:
a first radiator configured to transmit at least a first portion of the liquid of the fuel cell system therethrough for cooling of the at least a first portion of the liquid, the first radiator including a first lateral side and a second lateral side opposite the first lateral side,
a second radiator configured to transmit at least a second portion of the liquid of the fuel cell system therethrough for cooling of the at least a second portion of the liquid, the second radiator including a first lateral side and a second lateral side opposite the first lateral side, the second lateral side of the first radiator positioned adjacent the first lateral side of the second radiator to form a first angle therebetween, and
a fan arranged underneath the first radiator and the second radiator and configured to draw ambient air into the first radiator and the second radiator to cool the liquid of the fuel cell system passing through the first radiator and the second radiator.

2. The thermal management system of claim 1, wherein the first angle formed between the second lateral side of the first radiator and the first lateral side of the second radiator ranges from about 10 degrees to about 170 degrees.

3. The thermal management system of claim 1 or 2, wherein the first radiator includes a front face extending between and interconnecting the first lateral side and the second lateral side and a back face opposite the front face and facing toward the fan, the second radiator includes a front face extending between and interconnecting the first lateral side and the second lateral side and a back face opposite the front face and facing toward the fan, and wherein a distance between the fan and the back face of each of the first radiator and the second radiator at the first angle is at least about 100 mm.

4. The thermal management system of claim 1, 2 or 3, further including a third radiator configured to transmit at least a third portion of the liquid of the fuel cell system therethrough for cooling of the at least a third portion of the liquid, the third radiator including a first lateral side and a second lateral side opposite the first lateral side, the second lateral side of the second radiator positioned adjacent the first lateral side of the third radiator to form a second angle therebetween.

5. The thermal management system of claim 4, further including a fourth radiator configured to transmit at least a fourth portion of the liquid of the fuel cell system therethrough for cooling of the at least a fourth portion of the liquid, the fourth radiator including a first lateral side and a second lateral side opposite the first lateral side, the second lateral side of the third radiator positioned adjacent the first lateral side of the fourth radiator to form a third angle therebetween.

6. The thermal management system of any preceding claim, wherein the first radiator and the second radiator extend at least 100 degrees circumferentially around the fan.

7. The thermal management system of any preceding claim, further including a frame arranged between each of the first radiator and the second radiator and the fan, the frame being coupled to a top surface of a vehicle so that the first radiator and the second radiator are each exposed to ambient air.

8. A method of cooling a liquid of a fuel cell system including:
arranging a first radiator adjacent a second radiator to form a first angle therebetween,
positioning a fan underneath the first radiator and the second radiator,
flowing the liquid from the fuel cell system through the first radiator and the second radiator,
drawing ambient air into the first radiator and the second radiator via the fan,
cooling the liquid with the ambient air to form a cool liquid, and
recirculating the cool liquid to the fuel cell system.

9. The method of claim 8, further comprising forming the first angle to range from about 10 degrees to about 170 degrees.

10. The method of claim 8 or 9, further comprising creating a distance between the fan and each of the first radiator and the second radiator at the first angle, the distance being at least 100 mm.

11. The method of claim 8, 9 or 10, further comprising arranging a third radiator adjacent the second radiator to form a second angle therebetween.

12. The method of claim 11, wherein the second angle ranges from about 10 degrees to about 170 degrees.

13. The method of claim 11 or 12, further comprising arranging a fourth radiator adjacent the third radiator to form a third angle therebetween.

14. The method of any one of claims 8 to 13, further comprising mounting the first radiator and the second radiator in a frame, positioning the frame above the fan, and mounting the frame on a top surface of a vehicle.

15. The method of claim 14, wherein the vehicle is a train.
